# EUROPEAN PATENT SPECIFICATION

(11) **EP 3 537 798 B1**
(45) Date of publication and mention of the grant of the patent: **04.12.2024**
(21) Application number: 17867362.0
(22) Date of filing: 02.11.2017
(51) Int. Cl.: H04L 5/00, H04B 7/06, H04W 72/044, H04B 7/0408, H04B 7/08

(54) **METHOD AND DEVICE FOR ACQUIRING TRANSMISSION CONFIGURATION INFORMATION**
VERFAHREN UND VORRICHTUNG ZUR ERFASSUNG VON ÜBERTRAGUNGSKONFIGURATIONSINFORMATIONEN
PROCÉDÉ ET DISPOSITIF D'ACQUISITION D'INFORMATIONS DE CONFIGURATION DE TRANSMISSION

(30) Priority: 04.11.2016 CN 201610963258
(43) Date of publication of application: 11.09.2019
(73) Proprietor: ZTE Corporation, Shenzhen, Guangdong 518057 (CN)
(72) Inventor: GONG, Yuhong, Shenzhen, Guangdong 518057 (CN); LU, Zhaohua, Shenzhen, Guangdong 518057 (CN); LI, Yu Ngok, Shenzhen, Guangdong 518057 (CN); WANG, Xiaopeng, Shenzhen, Guangdong 518057 (CN); GAO, Bo, Shenzhen, Guangdong 518057 (CN)
(74) Representative: Aipex B.V.
(86) International application number: PCT/CN2017/109168
(87) International publication number: WO 2018/082624

(56) References cited:
- WO-A1-2014/098542
- WO-A1-2016/155840
- CN-A- 103 974 430
- CN-A- 104 885 377
- CN-A- 105 099 639
- KR-A- 20160 081 813
- US-A1- 2013 083 751
- US-A1- 2016 099 761
- US-A1- 2016 212 680
- INTEL CORPORATION: "UE beamforming impact on downlink control channel design", vol. RAN WG1, no. Gothenburg, Sweden; 20160822 - 20160826, 21 August 2016 (2016-08-21), XP051125455, Retrieved from the Internet <URL:http://www.3gpp.org/ftp/Meetings_3GPP_SYNC/RAN1/Docs/> [retrieved on 20160821]

## Description

### TECHNICAL FIELD

The present disclosure relates to the field of wireless communications and, in particular, to a method and device for acquiring transmission configuration information.

### BACKGROUND

To meet requirements on wireless data traffic due to the deployment of the communication system in the 4th Generation (4G) mobile communication technology, the communication system in the 5th Generation (5G) mobile communication technology is emerged, which is also referred to as a "beyond 4G network" or a "beyond Long Term Evolution (LTE) system". It is considered that higher frequency bands (e.g. higher than 3 GHz) are used in the 5G communication system to achieve a higher data rate. The high-frequency communication has relatively serious path losses and penetration losses, and is closely related to the atmosphere in the case of spatial propagation. Since the high frequency signal has an extremely short wavelength, a large number of small antenna arrays can be applied to obtain a more accurate beam direction in the beamforming techniques. In the communication system using the beamforming techniques, transmit and/or receive beamforming are used. Unlike the traditional LTE system, in the communication system using the beamforming techniques, both a control channel and a data channel are transmitted based on beams, and the receiving end may also receive the control channel and the data channel using beams. Further relevant technologies are also known from WO 2014/098542 A1 (SAMSUNG ELECTRONICS CO LTD [KR]) 26 June 2014 (2014-06-26), which relates to a method and apparatus for transmitting and receiving a control channel by beamforming in a wireless communication system, KR 2016 0081813 A (KOREA ELECTRONICS TELECOMM [KR]) 8 July 2016 (2016-07-08), which relates to a method for transmitting downlink control channel information in a base station operating a plurality of beams within a signal cell, WO 2016/155840 A1 (NOKIA SOLUTIONS & NETWORKS OY [FI]) 6 October 2016 (2016-10-06), which relates to scheduling in a full-dimension MIMO system, INTEL CORPORATION: "UE beamforming impact on downlink control channel design", 3GPP DRAFT; R1-166567, 3RD GENERATION PARTNERSHIP PROJECT (3GPP), MOBILE COMPETENCE CENTRE ; 650, ROUTE DES LUCIOLES; F-06921 SOPHIA-ANTIPOLIS CEDEX; FRANCE vol. RAN WG1, no. Gothenburg, Sweden; 20160822 - 20160826 21 August 2016 (2016-08-21), XP051125455, Retrieved from the Internet: RL: http://www.3gpp.org/ftp/Meetings_3GPP_SYNC/RAN1/Docs/ [retrieved on 2016-08-21], which relates to UE beamforming impact on downlink control channel design, and US 2016/212680 A1 (TALUKDAR ANUP [US] ET AL) 21 July 2016 (2016-07-21), which relates to a rapid rerouting in a communication system.

### SUMMARY

The feature of the method and device according to the present invention are defined in the independent claims. Further improvements are provided in the dependent claims. A summary of the subject matter is described hereinafter in detail. This summary is not intended to limit the scope of the claims.

Embodiments of the present disclosure provide a method and device for a determining transmission configuration information.

The technical solutions of the present disclosure are implemented as follows:
In a first aspect, provided is a method for determining transmission configuration information. The method includes the steps described below.

A first communication node determines transmission configuration information for configuring a control channel for on a time unit t+k, the transmission configuration information being information for configuring beams. The transmission configuration information comprises: quasi-co-location, QCL, information corresponding to a control channel transmission on the time unit t+k, and the transmission configuration information is an indication of a receive beam for reception by the second communication node of the control channel on the time unit t+k. The first communication node sends the transmission configuration information to a second communication node, wherein the first communication node sends the transmission configuration information to a second communication comprises: the first communication node sends the transmission configuration information to the second communication node, via a control signaling carried in a control channel, on a time unit t; wherein t is a non-negative integer, and k is indicated via the control signaling carried in the control channel on the time unit t and is a positive integer.

In a second aspect, provided is a device for performing the method for determining transmission configuration information as first communication node.

### BRIEF DESCRIPTION OF DRAWINGS

FIG. 1 is a schematic diagram illustrating a relationship between a transmit beam and a receive beam;
FIG. 2 is a flowchart of a method according to an embodiment of the present disclosure;
FIG. 3 is a flowchart of another method according to an embodiment of the present disclosure;
FIG. 4 is a flowchart of yet another method according to an embodiment of the present disclosure;
FIG. 5 is a flowchart of yet another method according to an embodiment of the present disclosure;
FIG. 6 is a flowchart of a method according to another embodiment of the present disclosure;
FIG. 7 is a flowchart of another method according to another embodiment of the present disclosure;
FIG. 8 is a flowchart of yet another method according to another embodiment of the present disclosure;
FIG. 9 is a schematic diagram of a relationship in time between type and corresponding function of a beam according to an embodiment of the present disclosure;
FIG. 10 is a schematic diagram of information interactions between a base station and a user equipment through a control channel according to an embodiment of the present disclosure;
FIG. 11 is a schematic diagram illustrating determining transmission configuration information of a control channel in a time unit pattern according to an embodiment of the present disclosure;
FIG. 12 is a schematic diagram illustrating sending and receiving a beam via a slot pattern according to an embodiment of the present disclosure;
FIG. 13 is a structural diagram of a device according to an embodiment of the present disclosure;
FIG. 14 is a structural diagram of another device according to an embodiment of the present disclosure;
FIG. 15 is a structural diagram of yet another device according to an embodiment of the present disclosure;
FIG. 16 is a structural diagram of a device according to another embodiment of the present disclosure;
FIG. 17 is a structural diagram of another device according to another embodiment of the present disclosure;
FIG. 18 is a structural diagram of yet another device according to another embodiment of the present disclosure; and
FIG. 19 is a structural diagram of a device according to yet another embodiment of the present disclosure.

### DETAILED DESCRIPTION

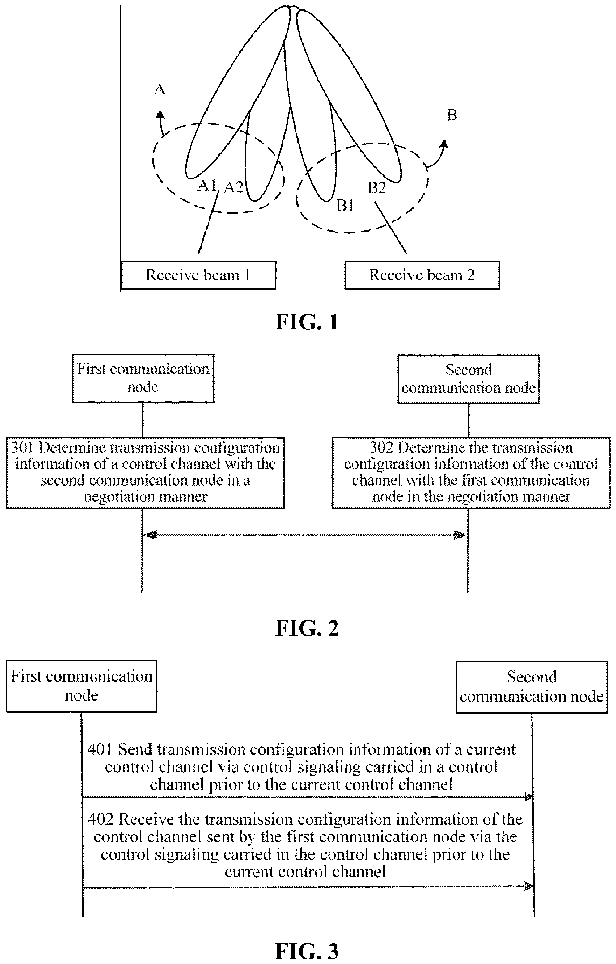

In a communication system using beamforming techniques, a receiving end feeds back a set of beams according to a measurement result, and a transmitting end selects one or more beams for transmitting a control channel or a data channel from a scheduling perspective. However, different transmit beams may correspond to different receive beams. As shown in FIG. 1, the receiving end feeds back information on two transmit beam groups (four beams) to the transmitting end. The two transmit beam groups are a transmit beam group A (including a transmit beam A1 and a transmit beam A2, corresponding to a receive beam 1) and a transmit beam group B (including a transmit beam B 1 and a transmit beam B2, corresponding to a receive beam 2). A base station selects the transmit beam group B to send a control channel/data channel from the scheduling perspective, but a user does not know the beam information selected by the base station, and then the user does not know which receive beam is adopted to receive the control channel/data channel. If the user selects a wrong receive beam, the receiving end will receive the control channel/data channel with reduced performance or even cannot receive the control channel/data channel, affecting system communication performance. In terms of the preceding problem, beam information or a transmission manner used for data channel transmission may be dynamically indicated through the control channel, but beam information or a transmission manner used for control channel transmission cannot be indicated through the control channel itself.

Technical solutions in embodiments of the present disclosure will be described clearly and completely in conjunction with the drawings in the embodiments of the present disclosure.

Transmit beamforming is generally a technique which concentrates signals sent by multiple antennas in a specific direction by using the multiple antennas. A combination of the multiple antennas is referred to as an antenna array, and each antenna in the antenna array is referred to as an antenna element. The propagation of signals enlarges because of the transmit beamforming and because signals are hardly received in other directions than a correlation direction, interference to other users is significantly reduced. Receive beamforming is a technique which concentrates the received radio waves in a specific direction by using a receive antenna array in a receiver. Sensitivity of signals incoming in a correlation direction increases because of the receive beamforming, and signals incoming in other directions than the correlation direction are removed from a received signal, thereby preventing interference signals.

An embodiment of the present disclosure provides a method for determining transmission configuration information. The method comprises determining, by a first communication node, transmission configuration information for configuring a control channel on a time unit t+k. The transmission configuration information comprises: quasi-co-location, QCL, information corresponding to a control channel transmission. The transmission configuration information is an indication of a receive beam for reception by the second communication node of the control channel on the time unit t+k. The method further comprises sending, by the first communication node, the transmission configuration information to a second communication node. The sending, by the first communication node, the transmission configuration information, comprises the sending, by the first communication node, to the second communication node, via a control signaling carried in a control channel, on a time unit t, the transmission configuration information, t is a non-negative integers, and k is indicated via the control signaling carried in the control channel on the time unit t and is a non-negative integer. In this way, the beam information may be indicated through the control channel, and the beam information may be indicated to the receiving end, ensuring system communication performance.

A method may perform steps as follows. In step 201, a second communication node determines transmission configuration information of a control channel with a first communication node. The first communication node and the second communication node have communication of beam information.

The first communication node and the second communication node transmit beam information or a transmission manner through the control channel.

Referring to FIG. 2, a method, not claimed, includes step 301 and step 302.

In step 301, a first communication node determines transmission configuration information of a control channel with a second communication node by signaling or by receiving feedback information from the second communication node.

For example, the first communication node and the second communication node mutually agree on the transmission configuration information of the control channel.

The signaling may include at least one of: a control signaling carried in the control channel, a media access control (MAC) signaling, a radio access control (RRC) signaling, and a broadcast signaling. In an exemplary embodiment, the control signaling carried in the control channel refers to the control signaling carried in a control channel prior to a current control channel.

For example, the control signaling carried in the control channel refers to the transmission configuration information of the current control channel, which may be notified to the second communication node via the control signaling carried in the control channel before the current control channel is sent.

For example, the feedback information carries the transmission configuration information of the control channel or auxiliary information for assisting the first communication node and the second communication node in determining transmission configuration information of the control channel. In this way, the first communication node may determine whether the transmission configuration information of the control channel considered by the second communication node is accurate by comparing whether the transmission configuration information of the control channel carried in the feedback information is the same as practical transmission configuration information of the control channel. If the transmission configuration information of the control channel carried in the feedback information is the same as the practical transmission configuration information of the control channel, it may be determined that the transmission configuration information of the control channel considered by the second communication node is accurate. Alternatively, it may be determined whether the transmission configuration information of the control channel considered by the second communication node is accurate according to the auxiliary information for assisting the first communication node and the second communication node in determining the transmission information of the control channel. For example, the auxiliary information for assisting the first communication node and the second communication node in determining the transmission information of the control channel may include: alternative transmission configuration information of the control channel, a correspondence between multiple kinds of transmission configuration information and different sets of demodulation reference signals, or a correspondence between the multiple kinds of transmission configuration information and different types of demodulation reference signal, a correspondence between the multiple kinds of transmission configuration information and different time unit patterns, and the like.

In step 302, the second communication node determines the transmission configuration information of the control channel with the first communication node.

The transmission configuration information includes one or more of: a sending manner corresponding to a control channel transmission, a receiving manner corresponding to the control channel transmission, quasi-co-location (QCL) information corresponding to the control channel transmission, a type of a measurement reference signal corresponding to the control channel transmission, a beam pattern corresponding to the control channel transmission, beam/beam group switching information corresponding to the control channel transmission, a transmission scheme corresponding to the control channel transmission, a frequency-domain sub-band index corresponding to the control channel transmission, a time domain Orthogonal Frequency Division Multiplexing (OFDM) symbol position corresponding to the control channel transmission, a blind detection area corresponding to the control channel transmission, a sub-carrier spacing corresponding to the control channel transmission, a duration of OFDM symbols corresponding to the control channel transmission, a length of a cyclic shift prefix corresponding to the control channel transmission, and the like.

In an exemplary embodiment, the sending manner corresponding to the control channel transmission may include a transmit beam, a transmit beam group, or a reference signal corresponding to the control channel transmission.

In an exemplary embodiment, the receiving manner corresponding to the control channel transmission may include a receive beam corresponding to the control channel transmission.

The type of the measurement reference signal corresponding to the control channel transmission may also be understood as the type of the measurement reference signal corresponding to the transmit/receive beam selected for the control channel transmission. Different types of measurement reference signal include reference signals (with different periods or patterns) with different resource (time domain/frequency domain/code domain) configurations, measurement reference signals for different purposes (such as synchronous signals, time-frequency offset calibration reference signals, beam measurement signals, beam tracking signals, and demodulation reference signals), and reference signals used at different beam training stages (such as reference signals at a beam scanning stage, reference signals at a beam tracking stage, reference signals at a beam recovery stage, and reference signals at a beam switching stage).

The beam pattern refers to a group of beams capable of forming a certain coverage range. The beams in different beam patterns may have different beam widths, different coverage capabilities, different inter-beam intervals, different main lobe gains, different side lobe gains, etc., and the different beam patterns may have different numbers of beams.

The transmission scheme corresponding to the control channel transmission refers to transmission techniques such as a transmission diversity, space division multiplexing, a single-port transmission, an open loop/semi-open loop/closed loop Multiple-Input Multiple-Output (MIMO) transmission, a repeated transmission, a multi-beam switching transmission, and the like. A new transmission scheme based on beams may be introduced in a 5G communication system.

In the method described in relation with figure 2, the second communication node acquires the transmission configuration information of the control channel from the first communication node.

Referring to FIG. 3, a method includes step 401 and step 402.

In step 401, a first communication node sends transmission configuration information of a current control channel to a second communication node via a control signaling carried in a control channel prior to the current control channel.

In step 402, the second communication node receives the transmission configuration information of the control channel sent by the first communication node via the control signaling carried in the control channel prior to the current control channel.

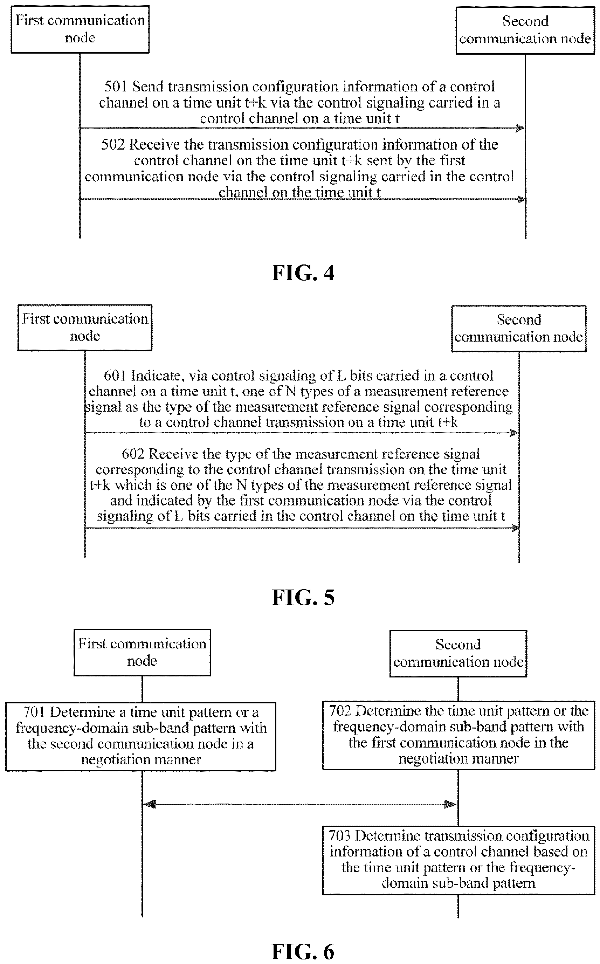

Referring to FIG. 4, a method includes step 501 and step 502.

In step 501, a first communication node sends transmission configuration information of a control channel on a time unit t+k to a second communication node via a control signaling carried in a control channel on a time unit t.

For example, k is simultaneously indicated to the second communication node via the control signaling carried in the control channel on the time unit t, and the second communication node may obtain k by receiving the control channel on the time unit t.

In step 502, the second communication node receives the transmission configuration information of the control channel on the time unit t+k sent by the first communication node via the control signaling carried in the control channel on the time unit t.

In this embodiment, t is a non-negative integers, k is a positive integer. The time unit may includes a sub-frame, a slot, a mini-slot, or an OFDM symbol.

In this embodiment, k is predefined, configured via a MAC signaling, configured via a RRC signaling, or indicated via the control signaling carried in the control channel on the time unit t.

A control channel may include a type of a measurement reference signal corresponding to a control channel transmission. Referring to FIG. 5, the method includes step 601 and step 602.

In step 601, a first communication node indicates, via a control signaling of L bits carried in a control channel on a time unit t, one of N types of the measurement reference signal as the type of the measurement reference signal corresponding to the control channel transmission on a time unit t+k.

L and N are positive integers, and L is less than or equal to 2^{N}.

In step 602, a second communication node receives the type of the measurement reference signal corresponding to the control channel transmission on the time unit t+k which is one of the N types of the measurement reference signal and indicated by the first communication node via the control signaling of L bits carried in the control channel on the time unit t.

A control channel may include a type of a measurement reference signal corresponding to a control channel transmission. The method may include A1 and A2.

In A1, a first communication node indicates, via a control signaling of L bits carried in a control channel on a time unit t, the type of the measurement reference signal corresponding to one of N measurement reference signal transmissions, which are closest to the time unit t and before the time unit t as the type of the measurement reference signal corresponding to the control channel transmission on a time unit t+k.

In A2, a second communication node receives the type of the measurement reference signal corresponding to the control channel transmission on the time unit t+k which is the type of the measurement reference signal corresponding to one of the N measurement reference signal transmissions, which are closest to the time unit t and before the time unit t and indicated by the first communication node via the control signaling of L bits carried in the control channel on the time unit t.

The method may include step 701, step 702, and step 703.

In step 701, a first communication node determines a time unit pattern or a frequency-domain sub-band pattern with a second communication node in a negotiation manner.

The time unit pattern or the frequency-domain sub-band pattern has a correspondence with transmission configuration information of a control channel. The number of the time unit pattern may be one or more, and the one or more time unit patterns may correspond to one or more kinds of preset transmission configuration information of the control channel. Of course, the number of the frequency-domain sub-band pattern may also be one or more, and the one or more frequency-domain sub-band patterns may correspond to one or more kinds of preset transmission configuration information of the control channel. In an exemplary embodiment, the time unit patterns have a one-to-one correspondence with the transmission configuration information of the control channel, or the frequency-domain sub-band patterns have a one-to-one correspondence with the transmission configuration information of the control channel. For example, M time unit patterns or M frequency-domain sub-band patterns may be determined, each time unit pattern and each frequency-domain sub-band pattern corresponds to their respective transmission configuration information of the control channel, where M is an integer greater than 1.

A time unit is a scheduling time unit or a minimum scheduling time unit. The time unit pattern includes one or more time units, and the frequency-domain sub-band pattern includes one or more frequency-domain sub-bands. The time unit may include a sub-frame, a slot, a mini-slot, an OFDM symbol, or the like. As a particular example, each of the M time unit patterns may also include one or more sets of OFDM symbols.

Each frequency-domain sub-band of the frequency-domain sub-band pattern may include at least one set of sub-band.

In step 702, the second communication node determines the time unit pattern or the frequency-domain sub-band pattern with the first communication node in the negotiation manner.

The time unit pattern or the frequency-domain sub-band pattern is indicated to the second communication node via a signaling of a bitmap.

Alternatively, the time unit pattern or the frequency-domain sub-band pattern is determined in a pre-agreement manner.

The bitmap is a bit sequence consisting of Y bits. The bitmap is used for indicating a position of the time unit included in the time unit pattern within a duration period. The duration period is composed of continuous Y time units, and the Y bits in the bitmap have a one-to-one correspondence with the Y time units in the duration period. For example, a value of 1 or 0 of each bit represents that the control channel whose transmission configuration information corresponds to the each bit is or is not allowed to be transmitted on the corresponding time unit.

As another embodiment of the present disclosure, the time unit pattern may also be pre-agreed by the first communication node and the second communication node. For example, it is agreed that different time unit subsets specified within a certain duration period correspond to different transmission configuration information of the control channel. For example, the time unit with an even index is a first time unit pattern and corresponds to a first kind of transmission configuration information of the control channel; and the time unit with an odd index is a second time unit pattern and corresponds to a second kind of transmission configuration information of the control channel. For another example, it is agreed that the time unit at a first half of the duration period is the first time unit pattern and corresponds to the first kind of transmission configuration information of the control channel; and the time unit at a latter half of the duration period is the second time unit pattern and corresponds to the second kind of transmission configuration information of the control channel. For another example, a set of time units with i (i is an integer from 0 to P-1) as a remainder of a modulo operation of a time unit index and P is an ith time unit pattern and corresponds to an ith kind of transmission configuration information of the control channel. The duration period includes one or more continuous time units. In an exemplary embodiment, the duration period is one frame or a specified number of continuous frames, one sub-frame or a specified number of continuous sub-frames, one slot or a specified number of continuous slots, etc..

The first communication node and the second communication node may also determine the M1 frequency-domain sub-band patterns in the negotiation manner. The M1 frequency-domain sub-band patterns respectively correspond to M1 kinds of transmission configuration information of the control channel, where M1 is an integer greater than 1. In an exemplary embodiment, a division of the frequency-domain sub-bands is pre-agreed by the first communication node and the second communication node. Each of the M1 frequency-domain sub-band patterns includes one or more sets of sub-bands. For example, the time unit pattern may be indicated to the second communication node via the signaling of the bitmap. The bitmap is a bit sequence consisting of X bits. The bitmap is used for indicating a position of the sub-band included in the frequency-domain sub-band pattern within a frequency domain bandwidth. The frequency domain bandwidth is composed of continuous X sub-bands, and the X bits in the bitmap have a one-to-one correspondence with the X frequency-domain sub-bands in the frequency domain bandwidth. For example, a value of 1 or 0 of each bit represents that the control channel whose transmission configuration information corresponds to the each bit is or is not allowed to be transmitted on the corresponding sub-band. The frequency domain bandwidth includes one or more sub-bands. In an exemplary embodiment, the frequency domain bandwidth is a maximum frequency domain bandwidth supported by the first communication node or the second communication node.

In step 703, the second communication node determines the transmission configuration information of the control channel based on the time unit pattern or the frequency-domain sub-band pattern.

The time unit patterns or the frequency-domain sub-band patterns respectively correspond to the preset transmission configuration information of the control channel.

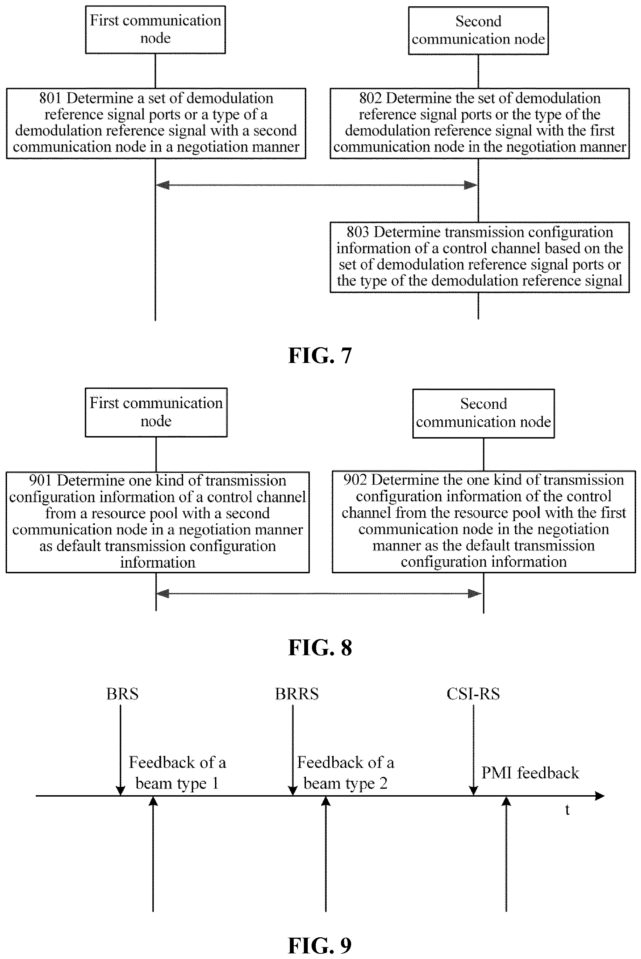

Referring to FIG. 7, the method may include step 801, step 802, and step 803.

In step 801, a first communication node determines a set of demodulation reference signal ports or a type of a demodulation reference signal with a second communication node.

The set of demodulation reference signal ports or the type of the demodulation reference signal has a correspondence with transmission configuration information of a control channel. In an exemplary embodiment, the correspondence may be a one-to-one correspondence.

The number of the set of demodulation reference signal ports may be one or more, and the one or more sets of demodulation reference signal ports may correspond to one or more kinds of preset transmission configuration information of the control channel. Of course, the number of the type of the demodulation reference signal may also be one or more, and the one or more types of the demodulation reference signal may correspond to the one or more kinds of preset transmission configuration information of the control channel. For example, Q sets of demodulation reference signal ports or Q types of the demodulation reference signal may be determined. The Q sets of demodulation reference signal ports correspond to Q kinds of transmission configuration information of the control channel, or the Q types of the demodulation reference signal respectively correspond to Q kinds of transmission configuration information of the control channel.

In step 802, the second communication node determines the set of demodulation reference signal ports or the type of the demodulation reference signal with the first communication node.

In step 803, the second communication node determines the transmission configuration information of the control channel based on the set of demodulation reference signal ports or the type of the demodulation reference signal.

The sets of demodulation reference signal ports or the types of the demodulation reference signal respectively correspond to the transmission configuration information of the control channel.

For example, the second communication node may demodulate and decode the control channel after obtaining the transmission configuration information of the control channel.

The control channel includes at least a first type of control channel and a second type of control channel. The transmission configuration information of the first type of control channel is pre-agreed with the second communication node.

Alternatively, the transmission configuration information of the first type of control channel is notified to the second communication node via a MAC signaling or a RRC signaling.

The transmission configuration information of the second type of control channel is indicated to the second communication node via a control signaling carried in the first type of control channel. Different types of control channels refer to control channels with different transmission configuration information, and the transmission configuration information of the different types of control channels may be determined.

Of course, the control channel may also include at least two stages of control channels. The two stages of control channels refer to a first stage of control channel and a second stage of control channel. The first stage of control channel is used for indicating a transmission of the second stage of control channel and the second stage of control channel is used for indicating a transmission of a data channel. The different types of control channels refer to the control channels with the different transmission configuration information.

The method may include B 1 and B2.

In B 1, a first communication node determines a resource pool of transmission configuration information of a control channel with a second communication node in a negotiation manner.

The resource pool includes one or more kinds of transmission configuration information.

The resource pool is further used for a transmission configuration of a data channel. In an exemplary embodiment, the data channel is related to the control channel.

In B2, the second communication node determines the resource pool of the transmission configuration information of the control channel with the first communication node in the negotiation manner.

The method may include C1 and C2.

In C1, a first communication node determines first transmission configuration information from a resource pool with a second communication node as transmission configuration information of a control channel.

For example, the first transmission configuration information is indicated to the second communication node via a first signaling.

In C2, the second communication node determines the first transmission configuration information from the resource pool with the first communication node as the transmission configuration information of the control channel.

In another embodiment, the method further includes D1 and D2.

In D1, the first communication node determines second transmission configuration information from the resource pool with the second communication node as transmission configuration information of a data channel.

The second transmission configuration information is indicated to the second communication node via a second signaling.

In D2, the second communication node determines the second transmission configuration information from the resource pool with the first communication node as the transmission configuration information of the data channel.

The first transmission configuration information may be the same as or different from the second transmission configuration information. The first signaling and the second signaling may be the same signaling or different signalings. In an exemplary embodiment, the first signaling and the second signaling are two independent signalings.

Referring to FIG. 8, the method may include step 901 and step 902.

In step 901, a first communication node determines one kind of transmission configuration information of a control channel from a resource pool with a second communication node as default transmission configuration information.

In step 902, the second communication node determines the one kind of transmission configuration information of the control channel from the resource pool with the first communication node in the negotiation manner as the default transmission configuration information.

For example, before the second communication node initially accesses a system, or re-accesses the system from an idle state, or receives a signaling from the first communication node, or receives a new signaling when the current signaling fails, the first communication node will send the control channel according to the default transmission configuration information and the second communication node will receive the control channel according to the default transmission configuration information.

The transmission configuration information further includes a principle for selecting the transmission configuration information of the control channel from an alternative transmission configuration information set. The alternative transmission configuration information set is pre-agreed with the second communication node, notified to the second communication node via a signaling, or determined according to feedback information, where the feedback information is sent by the second communication node. In an exemplary embodiment, the principle here is pre-agreed by the first communication node and the second communication node. For example, optimal RI beams are selected from multiple alternative beams fed back by a user equipment (UE) to transmit the control channel, where RI is a number of transmission layers.

The first communication node is a sending end of the control channel, and the second communication node is a receiving end of the control channel. In an exemplary embodiment, the first communication node is a base station or a network control node, and the second communication node is a UE or a terminal or a controlled network node.

Based on the preceding embodiments, the present disclosure is described in detail below through exemplary embodiments.

The description is made using an example in which transmission configuration information is a type of a beam measurement reference signal (RS), a first communication node is a base station, and a second communication node is a UE.

The base station and the UE have a unified understanding of the transmission configuration information of a control channel. The unified understanding may be obtained through a negotiation between the base station and the UE, which includes a mutual agreement between the base station and the UE, or a notification to the UE from the base station via a signaling, or an indication to the base station from the UE through feedback information. The unified understanding helps assist the UE in determining a correct receiving manner and ensures the receiving performance of the control channel.

It is assumed that a system has multiple types of measurement reference signals, and different RSs are used for measuring channel qualities of different beam types in a beam training phase.

For example, one measurement reference signal is used for measuring wider beams and another measurement reference signal is used for measuring narrower beams. When two types of measurement reference signals are used for measurement, the UE feeds back two types of beams. In this case, the base station and the UE should have a same understanding of RS type measurement on which the control channel is based or a beams type on which a control channel transmission is based; otherwise, if the base station selects the RS type measurement on which the control channel is based or the beam type on which the control channel transmission is based by itself according to scheduling requirements, the UE cannot determine which beam type or receive beam is adopted to receive the control channel since different RS types or beam types may correspond to different receive beams.

As shown in FIG. 9, it is assumed that three types of RSs are used for measuring beam qualities. The three types of RSs are a beam measurement reference signal (BRS), a beam refinement measurement reference signal (BRRS), and a channel state information reference signal (CSI-RS). The first two types of RSs are used for measuring a channel quality of an analog beam, and the third type of RS is used for measuring a digital precoding matrix indication (PMI). The BRS is used for measuring beam quality information of a beam type 1, and the UE feeds the beam quality information of the beam type 1 back to the base station based on the measurement with the BRS. The BRRS is used for measuring beam quality information of a beam type 2, and the UE feeds the beam quality information of the beam type 2 back to the base station based on the measurement with the BRRS. The quality information here refers to a beam Identity (ID) and received power information of a beam under each beam ID.

In an access stage, when the UE has completed downlink synchronization, and may instruct a physical downlink shared channel (PDSCH) to send an uplink random access response (RAR) to the UE through a physical downlink control channel (PDCCH) for a first time. The transmission configuration information such as a measurement RS type or a beam type on which the PDCCH is transmitted of the PDCCH may be predefined. For example, the base station and the UE pre-agree that the PDCCH in the access stage is fixedly sent and received using the BRS or according to the beam type 1. Alternatively, the transmission configuration information such as the measurement RS type or the beam type of the PDCCH may be notified to the UE through a broadcast channel in a downlink synchronization phase.

In the access phase, when the UE has completed the downlink synchronization and has received the transmission configuration information (such as the measurement RS type or the beam type) of the PDCCH after the PDCCH for transmitting the RAR, the transmission configuration information may be indicated via a control signaling carried in the PDCCH for transmitting the RAR. Alternatively, the transmission configuration information may be predefined or pre-agreed by the base station and the UE, or notified to the UE via a broadcast signaling.

After the UE has accessed the system, the transmission configuration information of a current PDCCH may be indicated via the control signaling carried in a previous PDCCH, or may be notified to the UE via a MAC signaling, a RRC signaling, or the like.

As for the transmission configuration information (such as the measurement RS type or the beam type) corresponding to a PDCCH transmission, the UE may also indicate that one beam may be used for a next PDCCH transmission or subsequent PDCCH transmissions while feeding back the beam quality information. The base station will determine the transmission configuration information (an RS type or the beam type used for transmissions) of the PDCCH immediately after the current UE feedback information according to an indication of the current UE feedback information until the base station receives an indication of the next UE feedback information. The base station will determine the transmission configuration information (the RS type or the beam type used for transmissions) of the PDCCH after the next UE feedback information according to the indication of the next UE feedback information, and so on.

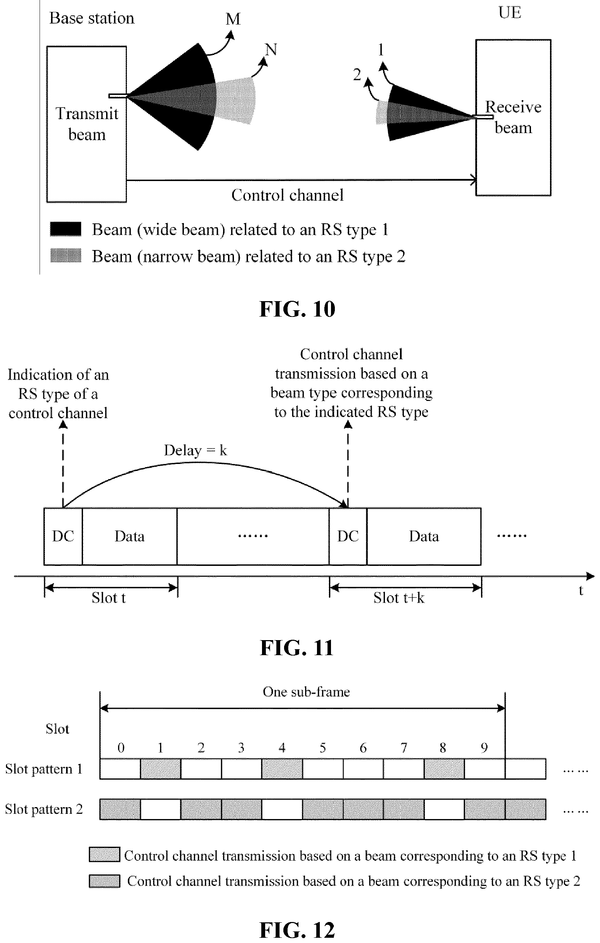

As shown in FIG. 10, the system has two measurement RS types, which respectively correspond to different beam types. A beam related to an RS type 1 is a wide beam, and a beam related to an RS type 2 is a narrow beam. A transmit beam corresponding to the RS type 1 is a beam M, and a receive beam corresponding to the RS type 1 is a beam 1. A transmit beam corresponding to the RS type 2 is a beam N, and a receive beam corresponding to the RS type 2 is a beam 2. The base station indicates the RS type to the UE via the signaling, and the UE determines the receive beam according to the RS type indicated via the received signaling and accurately receives the control channel. For example, if the base station indicates to the UE that the measurement RS type on which the control channel transmission is based is the type 1, the UE will receive the control channel with the beam 1; if the base station indicates to the UE that the measurement RS type on which the control channel transmission is based is the type 2, the UE will receive the control channel with the beam 2. The base station may indicate different measurement RS types or beam types for the control channel transmission according to different requirements in different scenarios and different cases.

The transmission configuration information of a current control channel may be indicated via the control signaling carried in a control channel before the current control channel is sent. As shown in FIG. 11, a control channel on a slot t carries information of the beam measurement RS type on which the control channel transmission on a slot t+k is based, and a control channel on the slot t+k will be sent and received according to the beam type corresponding to the beam measurement RS type indicated by the control channel on the slot t, where k is a positive integer .

Based on the preceding embodiments, the description is made using an example in which transmission configuration information is a beam measurement RS type and the transmission configuration information of a control channel is determined by determining a time unit pattern, a first communication node is a base station, and a second communication node is a UE.

The base station configures M time slot patterns via a signaling or pre-agrees the M slot patterns. The M slot patterns respectively correspond to M kinds of transmission configuration information of the control channel.

The base station configures one slot pattern via the signaling, and the base station and the UE agree that the control channel is sent or received using specified or predefined transmission configuration information under the one slot pattern. The control channel is sent or received using another kind of transmission configuration information specified or predefined on a time unit other than the one slot pattern, or the transmission configuration information of the control channel may be notified via the signaling on the time unit other than the one slot pattern.

As shown in FIG. 12, assuming that 10 slots are included in one sub-frame, the base station and the UE define two slot patterns (a slot pattern 1 and a slot pattern 2). The slot pattern 1 consists of slots 1, 4, and 8 in each sub-frame, and the slot pattern 2 consists of slots 0, 2, 3, 5, 6, 7, and 9 in the each sub-frame. The base station and the UE send and receive the control channel with a beam corresponding to a beam measurement RS type 1 in the slot pattern 1 according to an agreement, and send and receive the control channel with a beam corresponding to a beam measurement RS type 2 in the slot pattern 2 according to an agreement.

The slot pattern may be notified to the UE by the base station via a MAC signaling or a RRC signaling. For example, the UE may be notified in a bitmap manner. For example, the slot pattern 1 in FIG. 12 may be notified to the UE through a 10-bit bitmap, where 10 bits respectively correspond to 10 slots in one sub-frame in sequence. A value of 1 or 0 of each bit indicates whether a slot corresponding to the each bit is in the slot pattern. For example, the bitmap of the slot pattern 1 is 0100100010, and the bits from left to right sequentially correspond to slot indexes in an ascending order in the sub-frame.

Based on the preceding embodiments, the description is made using an example in which transmission configuration information of a control channel is determined by determining a set of demodulation reference signal ports, a first communication node is a base station, and a second communication node is a UE.

The base station and the UE make different transmission schemes correspond to different sets of user-specific reference signal (UE-RS) ports (e.g. demodulation reference signal (DMRS) ports) in a negotiation manner. For example, the control channel is capable of simultaneously supporting dual-port transmit diversity and dual-port space division multiplexing transmissions. The base station and the UE agree that the DMRS ports corresponding to the transmit diversity are ports {7, 8}, and the DMRS ports corresponding to the space division multiplexing are ports {9, 10}. In this case, the UE may determine the transmission scheme used for a control channel transmission according to the received DMRS port, and further demodulate and decode the control channel.

As another embodiment of the present disclosure, the base station and the UE make the different transmission schemes correspond to different DMRS types. For example, the control channel is capable of simultaneously supporting the transmit diversity and the space division multiplexing transmissions. The base station and the UE agree that the DMRS type corresponding to the transmit diversity is a DMRS type 1, and the DMRS type corresponding to the space division multiplexing is a DMRS type 2. The UE may determine the transmission scheme used for the control channel transmission according to the received DMRS type, and further demodulate and decode the control channel. In an exemplary embodiment, the DMRS types here may be different DMRS sequences (such as a Pseudo-Random noise (PRN) sequence and a const amplitude zero auto-correlation (CAZAC) sequence), and may correspond to different scrambling codes, have different demodulation performance (such as an orthogonal sequence and a Pseudo-orthogonal sequence), and correspond to different time-frequency positions.

The multiple transmission schemes being simultaneously supported by the control channel may be pre-agreed by the base station and the UE, or may be notified to the UE by the base station via a RRC signaling.

A correspondence between the different transmission schemes and the different sets of DMRS ports may be pre-agreed by the base station and the UE, or be notified to the UE by the base station via a signaling, or be notified to the base station by the UE at the time of channel/beam measurement information feedback; or a correspondence between the different transmission schemes and the different DMRS types may be pre-agreed by the base station and the UE, or be notified to the UE by the base station via a signaling, or be notified to the base station by the UE at the time of channel/beam measurement information feedback.

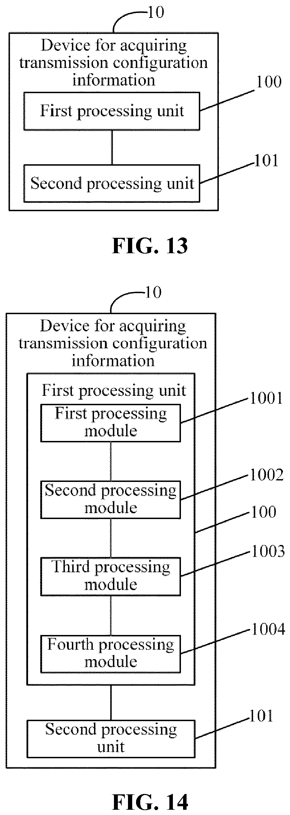

In the preceding exemplary embodiments, the transmission configuration information of the control channel is described by taking the beam measurement RS type as an example. Of course, the methods are also applicable to other transmission configuration information, such as the transmit beam/transmit beam group used for the control channel transmission, the receive beam corresponding to control channel transmission, quasi-co-location information corresponding to the control channel transmission, the beam pattern corresponding to the control channel transmission, beam/beam group switching information corresponding to the control channel transmission, the transmission scheme corresponding to the control channel transmission, a frequency-domain sub-band index corresponding to the control channel transmission, a time domain OFDM symbol position corresponding to the control channel transmission, a blind detection area corresponding to the control channel transmission, a sub-carrier spacing corresponding to the control channel transmission, a symbol duration corresponding to the control channel transmission, and a cyclic shift length corresponding to the control channel transmission. As shown in FIG. 13, the device may include a first processing unit 100.

The first processing unit 100 is configured to determine transmission configuration information of a control channel with a second communication node.

For example, the transmission configuration information includes one or more of: a sending manner corresponding to a control channel transmission, a receiving manner corresponding to the control channel transmission, quasi-co-location (QCL) information corresponding to the control channel transmission, a type of a measurement reference signal corresponding to the control channel transmission, a beam pattern corresponding to the control channel transmission, beam/beam group switching information corresponding to the control channel transmission, a transmission scheme corresponding to the control channel transmission, a frequency-domain sub-band index corresponding to the control channel transmission, a time domain Orthogonal Frequency Division Multiplexing (OFDM) symbol position corresponding to the control channel transmission, a blind detection area corresponding to the control channel transmission, a sub-carrier spacing corresponding to the control channel transmission, a length of a cyclic shift prefix corresponding to the control channel transmission, and a duration of OFDM symbols corresponding to the control channel transmission.

In an exemplary embodiment, the sending manner corresponding to the control channel transmission may include a transmit beam, a transmit beam group, or a reference signal corresponding to the control channel transmission.

In an exemplary embodiment, the receiving manner corresponding to the control channel transmission may include a receive beam corresponding to the control channel transmission.

The negotiation manner includes one or more of: a pre-agreement manner, a manner indicated by a signaling, and a manner by receiving feedback information from the second communication node.

The signaling includes at least one of: a control signaling carried in the control channel, a media access control (MAC) signaling, a radio access control (RRC) signaling, and a broadcast signaling. For example, as shown in FIG. 14, the first processing unit 100 includes a first processing module 1001.

The first processing module 1001 is configured to send the transmission configuration information of a current control channel to the second communication node via the control signaling carried in a control channel prior to the current control channel.

The first processing module 1001 is configured to perform a step described below.

The transmission configuration information of a control channel on a time unit t+k is sent to the second communication node via the control signaling carried in a control channel on a time unit t.

In this embodiment, t and k are both non-negative integers.

In this embodiment, k is predefined, configured via the MAC signaling, configured via the RRC signaling, or indicated via the control signaling carried in the control channel on the time unit t. The transmission configuration information includes the type of the measurement reference signal corresponding to the control channel transmission. As shown in FIG. 14, the first processing unit 100 further includes a second processing module 1002.

The second processing module 1002 is configured to indicate, via the control signaling of L bits carried in the control channel on the time unit t, one of N types of the measurement reference signal as the type of the measurement reference signal corresponding to the control channel transmission on the time unit t+k, where L and N are positive integers, and L is less than or equal to 2^{L}.

The transmission configuration information includes the type of the measurement reference signal corresponding to the control channel transmission. As shown in FIG. 14, the first processing unit 100 further includes a third processing module 1003.

The third processing module 1003 is configured to indicate, via the control signaling of L bits carried in the control channel on the time unit t, the type of the measurement reference signal corresponding to one of N measurement reference signal transmissions, which are closest to the time unit t and before the time unit t as the type of the measurement reference signal corresponding to the control channel transmission on the time unit t+k.

As shown in FIG. 13, the device further includes a second processing unit 101.

The second processing unit 101 is configured to notify the second communication node in the pre-agreement manner or via the signaling that the transmission configuration information of the control channel is the same as transmission configuration information of a data channel.

Alternatively, the second processing unit 101 is configured to notify the second communication node in the pre-agreement manner or via the signaling whether the transmission configuration information of the control channel is the same as the transmission configuration information of the data channel.

The data channel is related to the control channel.

As shown in FIG. 14, the first processing unit 100 further includes a fourth processing module 1004.

The fourth processing module 1004 is configured to determine a time unit pattern or a frequency-domain sub-band pattern with the second communication node in the negotiation manner.

The time unit pattern includes one or more time units, and the frequency-domain sub-band pattern includes one or more frequency-domain sub-bands. The time unit pattern or the frequency-domain sub-band pattern has a correspondence with the transmission configuration information of the control channel.

The time unit pattern or the frequency-domain sub-band pattern is indicated to the second communication node via a signaling of a bitmap.

Alternatively, the time unit pattern or the frequency-domain sub-band pattern is determined in the pre-agreement manner.

The time unit includes: a sub-frame, a slot, a mini-slot, or an OFDM symbol.

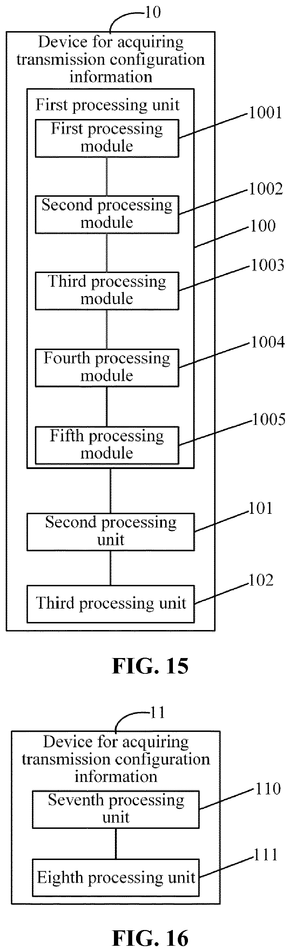

As shown in FIG. 15, the first processing unit 100 further includes a fifth processing module 1005.

The fifth processing module 1005 is configured to determine a set of demodulation reference signal ports or the type of the demodulation reference signal with the second communication node.

The set of demodulation reference signal ports or the type of the demodulation reference signal has a correspondence with the transmission configuration information of the control channel.

The control channel includes at least a first type of control channel and a second type of control channel.

The transmission configuration information of the first type of control channel is pre-agreed with the second communication node.

Alternatively, the transmission configuration information of the first type of control channel is notified to the second communication node via the MAC signaling or the RRC signaling.

The transmission configuration information of the second type of control channel is indicated to the second communication node via the control signaling carried in the first type of control channel.

The transmission configuration information further includes a principle for selecting the transmission configuration information of the control channel from an alternative transmission configuration information set.

The alternative transmission configuration information set is pre-agreed with the second communication node, notified to the second communication node via a signaling, or determined according to the feedback information, where the feedback information is sent by the second communication node.

For example, as shown in FIG. 15, the device further includes a third processing unit 102.

The third processing unit 102 is configured to determine a resource pool of the transmission configuration information of the control channel with the second communication node, where the resource pool includes one or more kinds of transmission configuration information.

The resource pool is further used for a transmission configuration of the data channel. In an exemplary embodiment, the data channel is related to the control channel.

The device further includes a fourth processing unit.

The fourth processing unit is configured to determine first transmission configuration information from the resource pool with the second communication node as the transmission configuration information of the control channel.

The device further includes a fifth processing unit.

The fifth processing unit is configured to determine second transmission configuration information from the resource pool with the second communication node as transmission configuration information of the data channel.

For example, the first transmission configuration information is indicated to the second communication node via a first signaling.

The second transmission configuration information is indicated to the second communication node via a second signaling.

The device further includes a sixth processing unit.

The sixth processing unit is configured to determine one kind of transmission configuration information from the resource pool with the second communication node as default transmission configuration information of the control channel.

Interaction processes between the various units and modules may refer to interaction processes according to methods corresponding to FIG. 2 to FIG. 8, which are not repeated herein.

The first communication node may notify the second communication node of the transmission configuration information of the control channel so that beam information is indicated to a receiving end the control channel, and the beam information may be indicated to the receiving end, ensuring system communication performance.

As shown in FIG. 16, the device may include a seventh processing unit 110.

The seventh processing unit 110 is configured to determine transmission configuration information of a control channel with a first communication node.

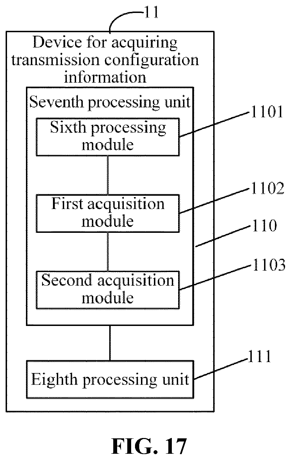

As shown in FIG. 17, the device may include a sixth processing module 1101.

The sixth processing module 1101 is configured to receive the transmission configuration information of a current control channel via a control signaling carried in a control channel prior to the current control channel.

The sixth processing module 1101 is configured to perform a step described below.

The transmission configuration information of a control channel on a time unit t+k sent by the first communication node is received via the control signaling carried in a control channel on a time unit t.

In this embodiment, t and k are both non-negative integers, and the time unit includes a sub-frame, a slot, a mini-slot, or an OFDM symbol.

In this embodiment, k is predefined, configured via a MAC signaling, configured via a RRC signaling, or indicated via the control signaling carried in the control channel on the time unit t.

As shown in FIG. 16, the device further includes an eighth processing unit 111.

The eighth processing unit 111 is configured to determine in a pre-agreement manner or via a signaling that the transmission configuration information of the control channel is the same as transmission configuration information of a data channel.

Alternatively, the eighth processing unit 111 is configured to determine in the pre-agreement manner or via the signaling whether the transmission configuration information of the control channel is the same as the transmission configuration information of the data channel.

The data channel is related to the control channel.

For example, as shown in FIG. 17, the seventh processing unit 110 includes a first acquisition module 1102 and a second acquisition module 1103.

The first acquisition module 1102 is configured to determine a time unit pattern or a frequency-domain sub-band pattern with the first communication node.

The second acquisition module 1103 is configured to determine the transmission configuration information of the control channel based on the time unit pattern or the frequency-domain sub-band pattern. The time unit pattern or the frequency-domain sub-band pattern has a correspondence with preset transmission configuration information of the control channel.

The time unit pattern includes one or more time units, and the frequency-domain sub-band pattern includes one or more frequency-domain sub-bands.

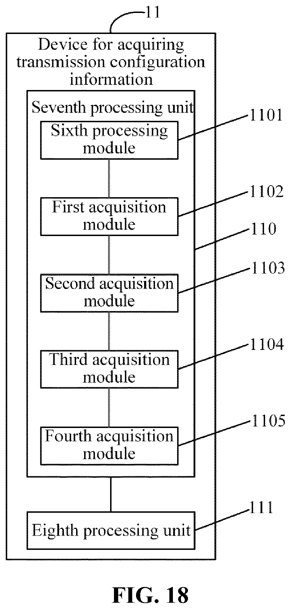

For example, as shown in FIG. 18, the seventh processing unit 110 includes a third acquisition module 1104 and a fourth acquisition module 1105.

The third acquisition module 1104 is configured to determine a set of demodulation reference signal ports or a type of a demodulation reference signal with the first communication node.

The fourth acquisition module 1105 is configured to determine the transmission configuration information of the control channel based on the set of demodulation reference signal ports or the type of the demodulation reference signal.

The set of demodulation reference signal ports or the type of the demodulation reference signal has a correspondence with the transmission configuration information of the control channel.

The control channel includes at least a first type of control channel and a second type of control channel.

The transmission configuration information of the first type of control channel is pre-agreed with the second communication node.

Alternatively, the transmission configuration information of the first type of control channel is notified to the second communication node via the MAC signaling or the RRC signaling.

The transmission configuration information of the second type of control channel is indicated to the second communication node via the control signaling carried in the first type of control channel.

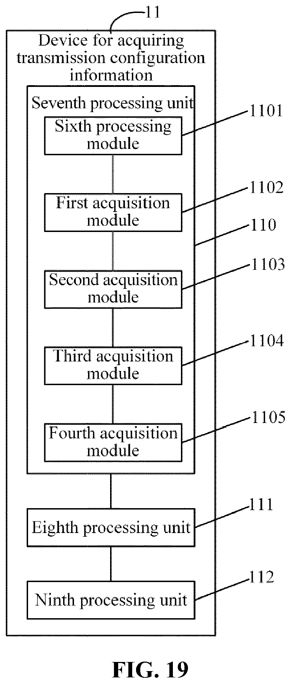

As shown in FIG. 19, the device further includes a ninth processing unit 112.

The ninth processing unit 112 is configured to determine a resource pool of the transmission configuration information of the control channel with the first communication node.

The resource pool includes one or more kinds of transmission configuration information. The resource pool is further used for a transmission configuration of the data channel. In an exemplary embodiment, the data channel is related to the control channel.

The transmission configuration information further includes a principle for selecting the transmission configuration information of the control channel from an alternative transmission configuration information set.

The alternative transmission configuration information set is pre-agreed with the first communication node, obtained via the signaling, or determined according to feedback information, where the signaling is sent by the first communication node, and the feedback information is obtained after the transmission configuration information is received from the first communication node.

The device further includes a tenth processing unit.

The tenth processing unit is configured to determine first transmission configuration information from the resource pool with the first communication node in the negotiation manner as the transmission configuration information of the control channel.

The first transmission configuration information is indicated to the second communication node via a first signaling.

The device further includes an eleventh processing unit.

The eleventh processing unit is configured to determine second transmission configuration information from the resource pool with the first communication node in the negotiation manner as transmission configuration information of the data channel.

The second transmission configuration information is indicated to the second communication node via a second signaling.

The device further includes a twelfth processing unit.

The twelfth processing unit is configured to determine one kind of transmission configuration information from the resource pool with the first communication node as default transmission configuration information of the control channel.

In practical applications, the first processing unit 100, the second processing unit 101, the first processing module 1001, the second processing module 1002, the third processing unit 102, the third processing module 1003, the fourth processing module 1004, the seventh processing unit 110, the sixth processing module 1101, the eighth processing unit 111, the first acquisition module 1102, the second acquisition module 1103, the third acquisition module 1104, the fourth acquisition module 1105, and the ninth processing unit 112 may all be implemented by a central processing unit (CPU), a microprocessor unit (MPU), a digital signal processor (DSP), a field programmable gate array (FPGA) or the like in a wireless data transmission apparatus.

The embodiments of the present disclosure further provide a computer-readable storage medium storing computer-executable instructions, which, when executed by a processor, are configured to execute any method described above.

It should be understood by those skilled in the art that function modules/units in all or part of the steps of the method, the system and the device disclosed above may be implemented as software, firmware, hardware and appropriate combinations thereof. In the hardware implementation, the division of the function modules/units mentioned in the above description may not correspond to the division of physical components. For example, one physical component may have several functions, or one function or step may be implemented jointly by several physical components. Some or all components may be implemented as software executed by processors such as digital signal processors or microcontrollers, hardware, or integrated circuits such as application specific integrated circuits. Such software may be distributed on a computer-readable medium, which may include a computer storage medium (or a non-transitory medium) and a communication medium (or a transitory medium). As is known to those skilled in the art, the term, computer storage medium, includes volatile and nonvolatile, removable and non-removable media implemented in any method or technology for storing information (such as computer-readable instructions, data structures, program modules or other data). The computer storage medium includes, but is not limited to, a random access memory (RAM), a read-only memory (ROM), an electrically erasable programmable read-only memory (EEPROM), a flash memory or other memory technologies, a compact disc-read only memory (CD-ROM), a digital versatile disc (DVD) or other optical disc storage, a magnetic cassette, a magnetic tape, a magnetic disk storage or other magnetic storage devices, or any other media used for storing desired information and accessed by a computer. In addition, as is known to those skilled in the art, the communication medium generally includes computer-readable instructions, data structures, program modules or other data in modulated data signals such as carriers or other transmission mechanisms, and may include any information delivery medium.

The above are only exemplary embodiments of the present disclosure and are not intended to limit the scope of the present disclosure.

## Claims

1. A method for determining transmission configuration information, **characterized in that**, comprising:
determining, by a first communication node, transmission configuration information for configuring a control channel on a time unit t+k, the transmission configuration information being information for configuring beams, wherein the transmission configuration information comprises: quasi-co-location, QCL, information corresponding to a control channel transmission on the time unit t+k, and the transmission configuration information is an indication of a receive beam for reception by a second communication node of the control channel on the time unit t+k; and
sending, by the first communication node, the transmission configuration information to the second communication node; wherein the sending, by the first communication node, the transmission configuration information, comprises: sending (501), by the first communication node, to the second communication node, via a control signaling carried in a control channel, on a time unit t, the transmission configuration information,
wherein t is a non-negative integer, and k is indicated via the control signaling carried in the control channel on the time unit t and is a positive integer.

2. A device for performing the method of claim 1 as first communication node.

## Patentansprüche

1. Verfahren zum Bestimmen von Übertragungskonfigurationsinformationen, **dadurch gekennzeichnet, dass** es Folgendes umfasst:
Bestimmen, durch einen ersten Kommunikationsknoten, von Übertragungskonfigurationsinformationen zum Konfigurieren eines Steuerkanals auf einer Zeiteinheit t+k, wobei die Übertragungskonfigurationsinformationen Informationen zum Konfigurieren von Strahlen sind, wobei die Übertragungskonfigurationsinformationen Folgendes umfassen:
Quasi-Co-Standort-, QCL-, Informationen, die einer Steuerkanalübertragung auf der Zeiteinheit t+k entsprechen, und die Übertragungskonfigurationsinformationen ein Indikator für einen Empfangsstrahl zum Empfang durch einen zweiten Kommunikationsknoten des Steuerkanals auf der Zeiteinheit t+k sind; und
Senden der Übertragungskonfigurationsinformationen durch den ersten Kommunikationsknoten an den zweiten Kommunikationsknoten, wobei das Senden der Übertragungskonfigurationsinformationen durch den ersten Kommunikationsknoten Folgendes umfasst: Senden (501) der Übertragungskonfigurationsinformationen durch den ersten Kommunikationsknoten an den zweiten Kommunikationsknoten über eine in einem Steuerkanal getragene Steuersignalisierung auf einer Zeiteinheit t,
wobei t eine nicht-negative ganze Zahl ist, und k über die im Steuerkanal getragene Steuersignalisierung auf der Zeiteinheit t angegeben wird und eine positive ganze Zahl ist.

2. Vorrichtung zum Durchführen des Verfahrens nach Anspruch 1 als ersten Kommunikationsknoten.

## Revendications

1. Procédé de détermination d'informations de configuration de transmission, **caractérisé en ce qu'**il comprend :
la détermination, par un premier noeud de communication, d'informations de configuration de transmission pour configurer un canal de commande sur une unité de temps t+k, les informations de configuration de transmission étant des informations pour configurer des faisceaux, dans lequel les informations de configuration de transmission comprennent : des informations de quasi-colocalisation, QCL, correspondant à une transmission de canal de commande sur l'unité de temps t+k, et les informations de configuration de transmission sont une indication d'un faisceau de réception pour la réception par un second noeud de communication du canal de commande sur l'unité de temps t+k ; et
l'envoi, par le premier noeud de communication, des informations de configuration de transmission au second noeud de communication ; dans lequel l'envoi, par le premier noeud de communication, des informations de configuration de transmission comprend : l'envoi (501), par le premier noeud de communication, au second noeud de communication, via une signalisation de commande transportée dans un canal de commande, sur une unité de temps t, des informations de configuration de transmission,
dans lequel t est un entier non négatif, et k est indiqué via la signalisation de commande transportée dans le canal de commande sur l'unité de temps t et est un entier positif.

2. Dispositif d'exécution du procédé selon la revendication 1 en tant que premier noeud de communication.
